# EUROPEAN PATENT SPECIFICATION

(11) **EP 1 792 817 B1**
(45) Date of publication and mention of the grant of the patent: **30.11.2011**
(21) Application number: 06022624.8
(22) Date of filing: 30.10.2006
(51) Int. Cl.: B62K 19/30, B62J 35/00, B62K 25/00

(54) **A motorcycle**
Motorrad
Une Motocyclette

(30) Priority: 01.12.2005 JP 2005347607
(43) Date of publication of application: 06.06.2007
(73) Proprietor: Honda Motor Co., Ltd., Minato-ku Tokyo Miyazaki 107-8556 (JP)
(72) Inventor: Takahashi, Atsuhiko, Wako-shi Saitama 351-0193 (JP); Harada, Dai, Wako-shi Saitama 351-0193 (JP)
(74) Representative: Liska, Horst

(56) References cited:
- EP-A- 1 531 104
- EP-A- 1 679 243
- EP-A2- 0 624 498
- US-A1- 4 469 190
- US-A1- 4 577 719

## Description

The present invention relates to a motorcycle which mounts a fuel pump on a vehicle body frame thereof.

There has been known a motorcycle which includes a vehicle body frame which is constituted of a head pipe, a main frame, a rear frame and the like and mounts a fuel pump on the vehicle body frame (for example, see JP-A-2004-284473 (Fig. 1)).

In Fig. 1 of the patent document 1, a vehicle body frame 12 includes a main pipe 28 which extends in the rearward direction from a head pipe 11, a down pipe 32 which extends obliquely in the rearward and downward direction from the head pipe 11 and, thereafter, extends in the rearward direction, and a rear wheel suspension portion 33 which connects a rear end of the main pipe 28 and a rear end of the down pipe 32. Further, a fuel pump 27 is arranged inside the rear wheel suspension portion 33.

The fuel pump 27 is arranged inside the left and right rear wheel suspension portions 33 and hence, it is possible to protect the fuel pump 27 from an impact which comes from a side of a vehicle body by the rear wheel suspension portions 33.

Further, to sufficiently protect the fuel pump 27 from the impact which comes from the side of the vehicle body, for example, it is necessary to increase a strength of the rear wheel suspension portions 33 (hereinafter, also referred to as the pivot plates 33) by increasing a plate thickness of the rear wheel suspension portions 33 or the like. However, there has been a drawback that a weight of the vehicle body is increased when the strength of the rear suspension portions 33 is increased.

In US-A1-4,469,190, on which the preamble of enclosed claim 1 is based, Figs. 1, 30 and 32 show a fuel pump 13 only schematically without mounting structures.

EP-A-1 531 104, Fig. 5 shows an ABS brake power pump modulator unit 68. The lower side of the modulator unit 68 is mounted via grommets 167 to a support plate 168 by bolts 171 inserted from below into holes 172 in the lower side of the modulator unit 68.

EP-A2-0 624 498, Figs. 6 to 8 show an ABS pump unit 136 positioned entirely within the body frame using the pump unit holder 153. According to Figs. 10 and 11, the pump unit 136 is mounted on the pump unit holder 153 by a horizontally extending bolt. According to Fig. 10, the holder 153 has an upper flange 156R extending above the pump unit 136 so that the pump unit cannot be inserted from above, but from the vehicle rear side only.

It is an object of the present invention to provide a motorcycle which can protect a fuel pump without increasing a weight of pivot plates.

This object is achieved by a motorcycle according to claim 1. In the motorcycle in which a main frame extends rearwardly from a head pipe, a rear frame extends rearwardly from the main frame, a frame structure body extends downwardly from a rear portion of the main frame and the rear frame to form a space portion, a pivot plate is mounted on a lower portion of the frame structure body, and a rear swing arm is supported on the pivot plate, a fuel pump is arranged in the space portion which is formed by the frame structure body.

The invention according to claim 2 is characterized in that the main frame is arranged on a center line in the vehicle width direction, a fuel tank is arranged at a position where the fuel tank strides over the main frame, the fuel pump is arranged at the substantially center in the vehicle width direction and, at the same time, a connection portion of a fuel pipe which connects the fuel tank and the fuel pump is arranged on an upper portion of the fuel pump.

The invention according to claim 3 is characterized in that an article storage box is arranged on a side of the fuel pump.

In the invention according to claim 1, the frame structure body is arranged above the pivot plate, and the fuel pump is arranged in the inside of the frame structure body and hence, it is possible to protect the fuel pump by the frame structure body. Further, it is unnecessary to protect the fuel pump by the pivot plate and hence, it is possible to suppress the increase of a plate thickness of the pivot plate.
As a result, it is possible to protect the fuel pump without increasing the weight of the pivot plate.

In the invention according to claim 2, the fuel tank is mounted so as to stride over the main frame which is arranged on the center in the vehicle width direction and the fuel pump is arranged at the substantially center in the vehicle width direction and hence, the fuel tank and the fuel pump are arranged at the substantially center in the vehicle width direction with each other whereby a distance between the fuel tank and the fuel pump is decreased. As a result, it is possible to decrease a length of the fuel pipe which connects the fuel tank and the fuel pump.
In addition, by arranging the connection portion of the fuel pump and the fuel pipe on an upper portion of the fuel pump, a connection operation of the fuel pipe can be performed easily and hence, it is possible to easily perform the connection and handling of the fuel pipe.

In the invention according to claim 3, the article storage box is arranged on the side of the fuel pump and hence, it is possible to protect the fuel pump by the article storage box. As a result, it is possible to further enhance the protective performance of the fuel pump against an impact which comes from the side of the vehicle body.

Hereinafter, a best mode for carrying out the present invention is explained in conjunction with attached drawings. Here, the drawings are viewed in the same direction as numerals.
- Fig. 1: is aside view of a motorcycle according to the present invention.
- Fig. 2: is aside view of an essential part of the motorcycle of the present invention.
- Fig. 3: is a perspective view for explaining the mounting structure of a fuel pump which is provided to the motorcycle according to the present invention.
- Fig. 4: is a view as viewed in the direction indicated by an arrow 4 in Fig. 2.
- Fig. 5: is a perspective view for explaining an arrangement of elements on a side of a fuel pump provided to the motorcycle according to the present invention.

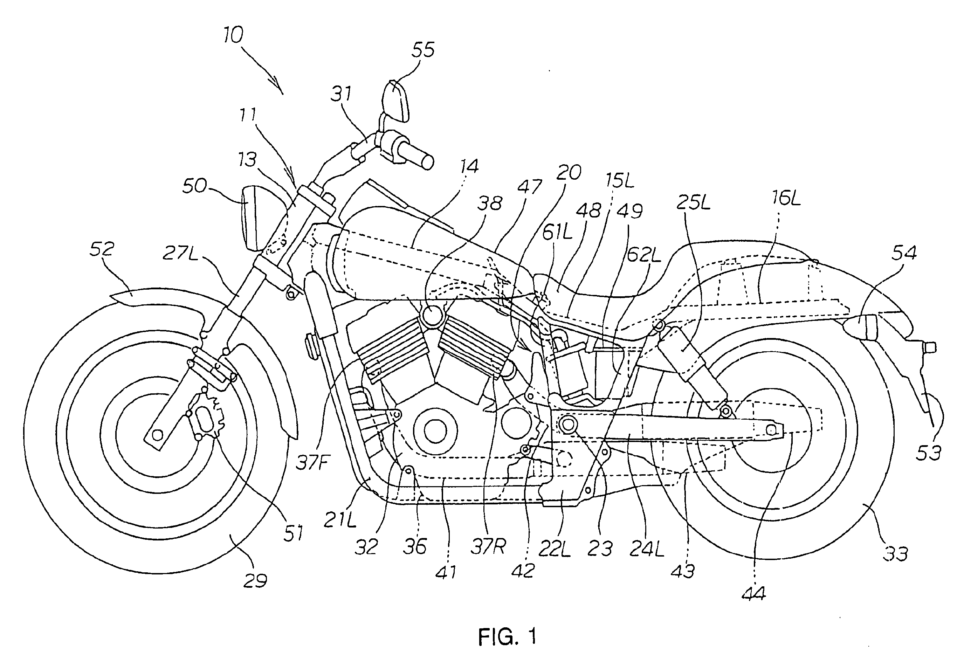

Fig. 1 is a side view of a motorcycle according to the present invention, wherein a motorcycle 10 includes a vehicle body frame 11. The motorcycle 10 is a vehicle in which the vehicle body frame 11 is constituted of a head pipe 13 which is mounted on a front end portion of the vehicle, a main frame 14 which extends rearwardly from the head pipe 13, rear frames 15L, 15R (showing only the reader's side rear frame indicated by symbol 15L) which extend rearwardly from a rear end portion of the main frame 14, seat rails 16L, 16R (showing only the reader's side seat rail indicated by symbol 16L) which extend rearwardly from rear end portions of the rear frames 15L, 15R, a frame structure body 20 which extends downwardly from the rear portion of the main frame 14 and the rear frames 15L, 15R, down frames 21L, 21R (showing only the reader' s side down frame indicated by symbol 21L) which extend in the oblique downward direction from the head pipe 13, pivot plates 22L, 22R (showing only the reader's side pivot plate indicated by symbol 22L) which are mounted on rear ends of the down frames 21L, 21R and a lower end portion of the frame structure body 20, a pivot shaft 23 which is rotatably mounted between the pivot plates 22L, 22R, rear swing arms 24L, 24R (showing only the reader's side rear swing arm indicated by symbol 24L) which are mounted by way of the pivot shaft 23 in a vertically swingable manner, and rear cushion units 25L, 25R (showing only the reader's side rear cushion unit indicated by symbol 25L) which connect the rear swing arms 24L, 24R and the seat rails 16L, 16R.
The frame structure body 20 is explained in detail in conjunction with a following drawing.

Further, in the motorcycle 10, front forks 27L, 27R (showing only the reader's side front fork indicated by symbol 27L) are steerablly mounted on the head pipe 13, a front wheel 29 is rotatably mounted on lower ends of the front forks 27L, 27R, a steering-use handle 31 is mounted on upper portions of the front forks 27L, 27R, an engine 32 is arranged in a space surrounded by the main frame 14 and the down frames 21L, 21R, and a rear wheel 33 is rotatably mounted on rear ends of the rear swing arms 24L, 24R (showing only the reader's side rear swing arm indicated by symbol 24L).

The engine 32 is a V-type two-cylinder engine which includes a crank case 36, two cylinder portions 37F, 37R which are mounted on the crank case 36 in an erected manner, and a fuel supply device 38 which supplies fuel to the cylinder portions 37F, 37R.

The exhaust system of the engine 32 is constituted as follows. A first exhaust pipe 41 is connected to the front cylinder portion 37F which is mounted on the V-type engine, the first exhaust pipe 41 extends rearwardly, a second exhaust pipe 42 is connected to the rear cylinder portion 37R, a first silencer 43 is connected to a rear portion of the first exhaust pipe 41, and a second silencer 44 is connected to a rear portion of the second exhaust pipe 42.

Numeral 47 indicates a fuel tank, numeral 48 indicates a rider's seat, numeral 49 indicates a battery, numeral 50 indicates a head lamp, numeral 51 indicates a front brake unit, numeral 52 indicates a front fender, numeral 53 indicates a rear fender, numerals 54L, 54R indicate rear blinkers (showing only the reader's side rear blinker indicated by symbol 54L), and numeral 55 indicates a mirror.

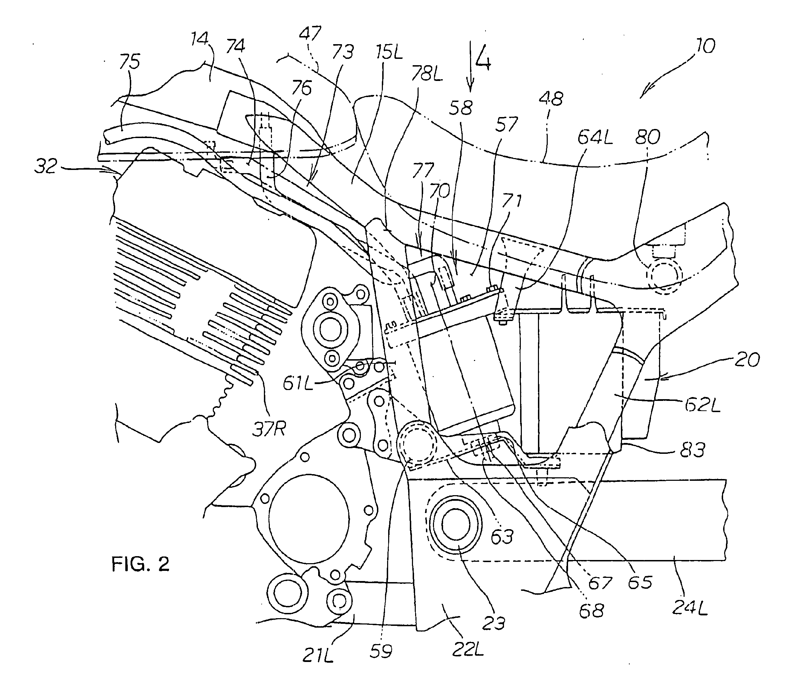

Fig. 2 is a side view of an essential part of the motorcycle of the present invention. The frame structure body 20 is constituted of front center frames 61L, 61R (showing only the reader's side front center frame indicated by symbol 61L) which extend downwardly from front portions of the rear frames 15L, 15R (showing only the reader' s side rear frame indicated by symbol 15L), and rear center frames 62L, 62R (showing only the reader's side rear center frame indicated by symbol 62L) extend downwardly from rear portions of the rear frames 15L, 15R (showing only the reader's side rear frame indicated by symbol 15L).

The pivot plates 22L, 22R (showing only the reader's side pivot plate indicated by symbol 22L) are provided at positions where rear ends of the down frames 21L, 21R (showing only the reader's side down frame indicated by symbol 21L), lower end portions of the front center frames 61L, 61R (showing only the reader's side front center frame indicated by symbol 61L) and lower end portions of the rear center frames 62L, 62R (showing only the reader's side rear center frame indicated by symbol 62L) are arranged.
A cross beam 59 is arranged between the left and right front center frames 61L, 61R.
Further, a fuel pump 58 is arranged in a space portion 57 which is formed by the frame structure body 20.

That is, the motorcycle 10 has the following constitution. The main frame 14 extends rearwardly from the head pipe 13 (see Fig. 1), the rear frames 15L, 15R (showing the only reader's side rear frame indicated by symbol 15L) extend rearwardly from the main frame 14, the frame structure body 20 extends downwardly from the rear frames 15L, 15R to form the space portion 57, the pivot plates 22L, 22R (showing only the reader' s side pivot plate indicated by symbol 22L) are mounted on a lower portion of the frame structure body 20, and the rear swing arms 24L, 24R (showing only the reader's side rear swing arm indicated by symbol 24L) are supported on the pivot plates 22L, 22R.

In this embodiment, although the front center frames 61L, 61R and the rear center frames 62L, 62R which constitute the frame structure body 20 are members which extend downwardly from the rear frame 15, there exists no problem in extending the front center frames 61L, 61R downwardly from the rear portion of the main frame 14.

To explain the mounting structure of the fuel pump 58, a first stay 63 extends rearwardly from the cross beam 59 and left and right second stays 64L, 64R (showing only the reader' s side second stay indicated by symbol 64L) extend downwardly from the rear frames 15 and hence, the fuel pump 58 can be mounted on the first stay 63 and the second stays 64L, 64R by way of a resilient member 65 ... (... indicating a plural of, this definition applicable to the description hereinafter) using fastening members 66, 71, 71.

A cylindrical hole 67 is formed in the first stay 63, and a shaft member 68 which projects downwardly from the fuel pump 58 is fixed to the cylindrical hole 67. Numeral 70 indicates an axis of the fuel pump 58.

A fuel pipe 73 is constituted of a fuel takeout pipe 74 which takes out the fuel from the fuel tank 47, a feed pipe 75 which pressurizes the fuel sucked by the fuel takeout pipe 74 and feeds the fuel from the fuel pump 58 to the fuel supply device 38 (see Fig. 1), and a return pipe 76 which returns vapor (bubbles) generated by the fuel pump 58 to the fuel tank 47.

A connection portion 77 is arranged in the vicinity of connection portions 78L, 78R (showing only the reader's side connection portion indicated by symbol 78L) of the rear frames 15L, 15R (showing only the reader's side rear frame indicated by symbol 15L) and the front center frames 61L, 61R (showing only the reader's side front center frame indicated by symbol 61L).

In the vicinity of the connection portions 78L, 78R (showing only the reader's side connection portion indicated by symbol 78L), the rear frames 15L, 15R (showing only the reader' s side rear frame indicated by symbol 15L) and the front center frames 61L, 61R (showing only the reader's side front center frame indicated by symbol 61L) are arranged close to each other thus increasing a strength of the connection portions 78L, 78R. Accordingly, by arranging the connection portion 77 of the fuel pump 58 in the vicinity of the connection portions 78L, 78R, it is possible to surely protect the connection portion 77 from an impact.

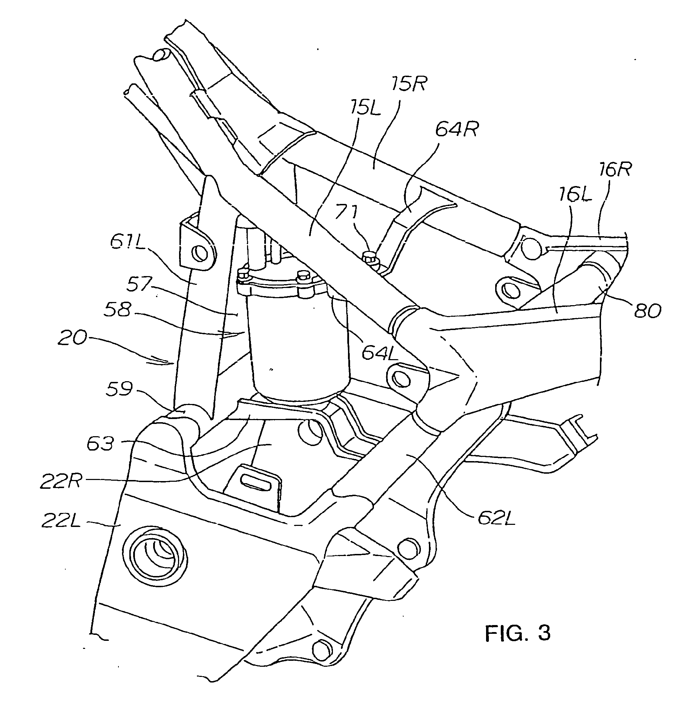

Fig. 3 is a perspective view for explaining the mounting structure of a fuel pump which is provided to the motorcycle according to the present invention. By arranging the fuel pump 58 on the first stay 63 which extends from the cross beam 59, the fuel pump 58 is supported from below. Further, by extending the second stays 64L, 64R from the rear frames 15L, 15R so as to connect the fuel pump 58 and the rear frames 15L, 15R. Due to such a constitution, the fuel pump 58 can be held.

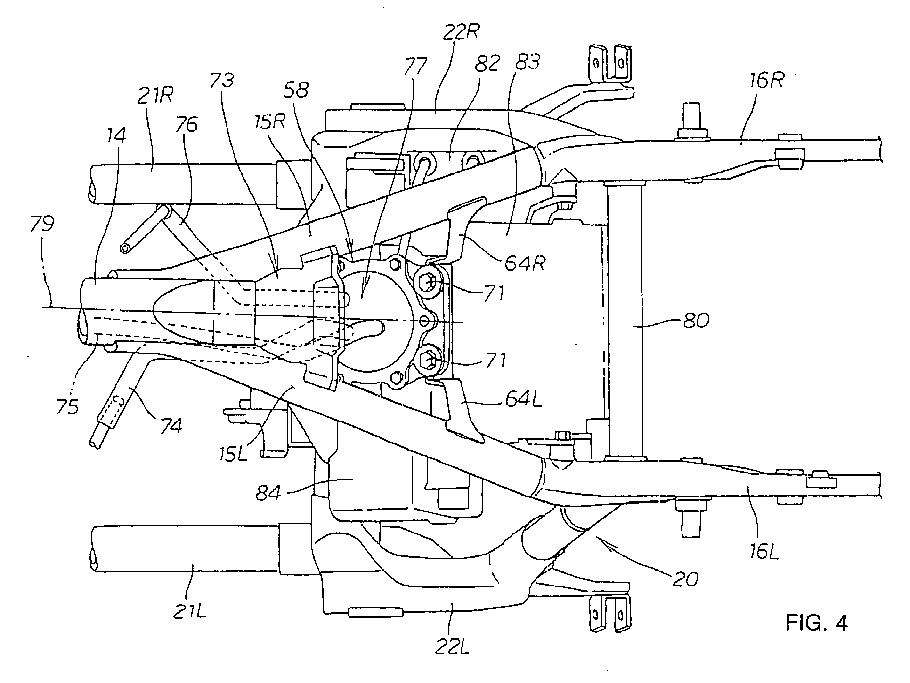

Fig. 4 is a view as viewed in the direction indicated by an arrow 4 in Fig. 2. In Fig. 4, the main frame 14 is arranged on a center line in the vehicle width direction, the fuel tank 47 (see Fig. 2) is arranged at a position which strides over the main frame 14, the fuel pump 58 is arranged at the substantially center in the vehicle width direction and, further, the connection portion 77 of the fuel pipe 73 which connects the fuel tank 47 and the fuel pump 58 is arranged on an upper portion of the fuel pump 58.

Numeral 80 indicates a rear cross beam.

The fuel tank 47 (see Fig. 2) is mounted so as to stride over the main frame 14 which is arranged on the center line in the vehicle width direction, and the fuel pump 58 is arranged at the substantially center in the vehicle width direction. The fuel tank 47 and the fuel pump 58 are arranged at the substantially center in the vehicle width direction with each other and hence, a distance between the fuel tank 47 and the fuel pump 58 is decreased. As a result, it is possible to shorten a length of the fuel pipe 73 which connects the fuel tank 47 and the fuel pump 58.

In addition, by arranging the connection portion 77 of the fuel pump 58 and the fuel pipe 73 above the fuel pump 58, a connection operation of the fuel pipe 73 can be facilitated thus easing the connection and the handling of the fuel pipe 73.
Further, by arranging the connection portion 77 of the fuel pump 58 and the fuel pipe 73 above the fuel pump 58, it is possible to easily perform the connection and the handling of the fuel pipe 73.

The fuel pump 58 has an axially elongated substantially columnar shape. Further, an axis of the fuel pump 58 is arranged to be directed in the vertical direction. Accordingly, it is possible to separate the fuel pump 58 from an outer surface of the vehicle body thus making the fuel pump 58 hardly receive an impact from the side of the vehicle body.

An article storage box 84 is arranged on a left side of the fuel pump 58, an inclination sensor 81, a starter magnet 82 and the like are arranged on a right side of the fuel pump 58, and a battery storage box 83 which stores a battery is arranged behind the fuel pump 58.

In addition to the frame structure body 20, the article storage box 84, the starter magnet 82, a fuse box and the like are arranged on the side of the fuel pump 58 and hence, it is possible to further enhance the fuel-pump protective performance against an impact which comes from the side of the vehicle body.

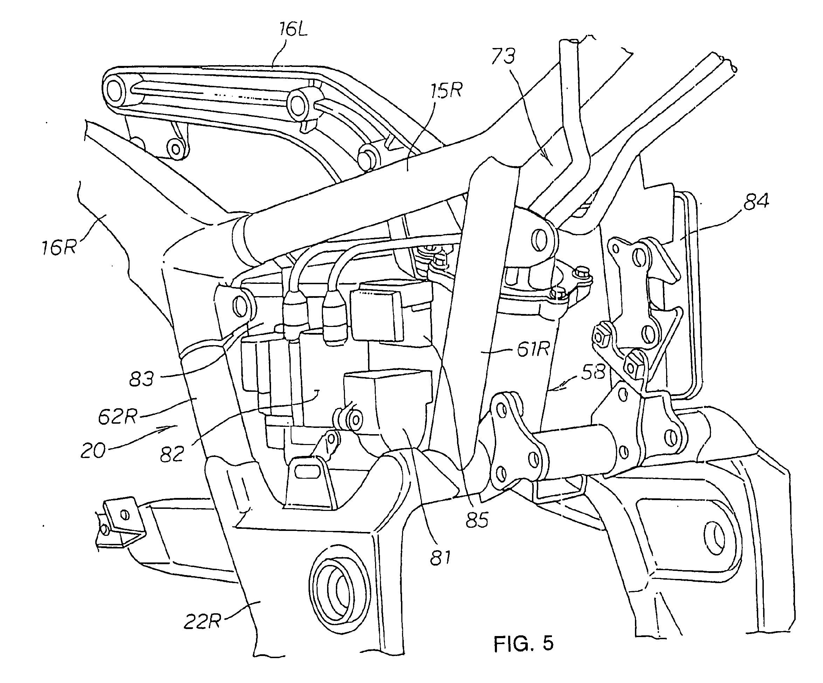

Fig. 5 is a perspective view for explaining an arrangement of elements on the side of the fuel pump provided to the motorcycle according to the present invention. In Fig. 5, the inclination sensor 81, the starter magnet 82 and the battery storage box 83 are arranged around the frame structure body 20 in a state that the inclination sensor 81, the starter magnet 82 and the battery storage box 83 surround the fuel pump 58. Accordingly, it is possible to protect the fuel pump 58 from an impact which comes from the surrounding thereof. Numeral 85 indicates the fuse box.

The manner of operation of the motorcycle having the above-mentioned constitution is explained hereinafter.
Returning to Fig. 3, the frame structure body 20 is arranged above the pivot plates 22L, 22R and the fuel pump 58 is arranged in the inside of the frame structure body 20 and hence, it is possible to protect the fuel pump 58 by the frame structure body 20. Further, it is unnecessary to protect the fuel pump 58 by the pivot plates 22L, 22R and hence, it is possible to suppress the increase of a plate thickness of the pivot plates 22L, 22R.
As a result, it is possible to protect the fuel pump 58 without increasing a weight of the pivot plates 22L, 22R.

Here, in this embodiment, the frame structure body is constituted of the front center frames which are arranged on left and right sides and extend downwardly, while the rear center frames which are arranged on left and right sides and extend downwardly. However, plate-shape members may be used in place of the front center frames and the rear center frames.

The present invention is suitably applicable to a motorcycle.

The present invention provides a motorcycle which can protect a fuel pump without increasing a weight of a pivot plate.
To achieve this, in a motorcycle 10, a main frame 14 extends rearwardly from a head pipe 13, rear frames 15 extend rearwardly from the main frame 14, a frame structure body 20 extends downwardly from the rear frame 15 to form a space portion 57, a pivot plate 22 is mounted on a lower portion of the frame structure body 20, and a rear swing arm 24 is supported on the pivot plate 22. In such a constitution, a fuel pump 58 is arranged in the space portion 57 which is formed by the frame structure body 20.

## Claims

1. A motorcycle in which a main frame (14) extends rearwardly from a head pipe (13), a rear frame (15) extends rearwardly from the main frame (14), a frame structure body (20) extends downwardly from a rear portion of the main frame (14) and the rear frame (15) to form a space portion (57), a pivot plate (22) is mounted on a lower portion of the frame structure body (20), and a rear swing arm (24) is supported on the pivot plate (22), wherein
a fuel pump (58) is arranged in the space portion (57) which is formed by the frame structure body (20),
**characterized in that**
a mounting structure of the fuel pump (58) has a first stay (63) extending rearwardly from a cross beam (59) arranged between left and right front frame elements (61 L, 61 R) of the frame structure body (20) extending downwardly from the rear portion of the main frame (14), and left and right second stays (64L, 64R) extending downwardly from the rear frames (15L, 15R),
wherein a cylindrical hole (67) is formed in the first stay (63) and a shaft member (68) which projects downwardly from the fuel pump (58) is fixed to the cylindrical hole (67), and the fuel pump (58) is furthermore connected at an upper portion thereof to the rear frames (15L, 15R) by the second stays (64L, 64R).

2. A motorcycle according to claim 1, wherein the main frame (14) is arranged on a center line (79) in the vehicle width direction, a fuel tank (47) is arranged at a position where the fuel tank (47) strides over the main frame (14), the fuel pump (58) is arranged at the substantially center in the vehicle width direction and, at the same time, a connection portion (77) of a fuel pipe (73) which connects the fuel tank (47) and the fuel pump is arranged on an upper portion of the fuel pump (58).

3. A motorcycle according to claim 1 or claim 2, wherein an article storage box (84) is arranged on a side of the fuel pump (58).

## Patentansprüche

1. Kraftrad, worin sich ein Hauptrahmen (14) von einem Kopfrohr (13) nach hinten erstreckt, sich ein Heckrahmen (15) von dem Hauptrahmen (14) nach hinten erstreckt, sich ein Rahmenstrukturkörper (20) von einem hinteren Abschnitt des Hauptrahmens (14) und dem Heckrahmen (15) nach unten erstreckt, um einen Zwischenraumabschnitt (57) zu bilden, eine Anlenkplatte (22) an einem unteren Abschnitt des Rahmenstrukturkörpers (20) angebracht ist und ein hinterer Schwingarm (24) an der Anlenkplatte (22) gelagert ist, worin
eine Kraftstoffpumpe (58) in dem vom Rahmenstrukturkörper (20) gebildeten Zwischenraumabschnitt (57) angeordnet ist,
**dadurch gekennzeichnet, dass** eine Befestigungsstruktur der Kraftstoffpumpe (58) einen ersten Steg (63), der sich von einem Querträger (59) nach hinten erstreckt, der zwischen linken und rechten vorderen Rahmenelementen (61 L, 61 R) des Rahmenstrukturkörpers (20) angeordnet ist, welcher sich von dem hinteren Abschnitt des Hauptrahmens (14) nach unten erstreckt, sowie linke und rechte zweite Stege (64L, 64R), die sich von dem Heckrahmen (15L, 15R) nach unten erstrecken, aufweist,
worin ein zylindrisches Loch (67) in dem ersten Steg (63) ausgebildet ist und ein Schaftelement (68), das von der Kraftstoffpumpe (58) nach unten vorsteht, an dem zylindrischen Loch (67) befestigt ist, und die Kraftstoffpumpe (58) ferner an ihrem oberen Abschnitt mit den Heckrahmen (15L, 15R) durch die zweiten Stege (64L, 64R) verbunden ist.

2. Kraftrad nach Anspruch 1, worin der Hauptrahmen (14) auf einer Mittellinie (79) in der Fahrzeugbreitenrichtung angeordnet ist, ein Kraftstofftank (47) an einer Position angeordnet ist, wo der Kraftstofftank (47) den Hauptrahmen (14) überspannt, die Kraftstoffpumpe (58) in der angenäherten Mitte in der Fahrzeugbreitenrichtung angeordnet ist und gleichzeitig ein Verbindungsabschnitt (77) eines Kraftstoffrohrs (73), das den Kraftstofftank (47) und die Kraftstoffpumpe verbindet, an einem oberen Abschnitt der Kraftstoffpumpe (58) angeordnet ist.

3. Kraftrad nach Anspruch 1 oder Anspruch 2, worin ein Gegenstandaufnahmekasten (84) an einer Seite der Kraftstoffpumpe (58) angeordnet ist.

## Revendications

1. Motocyclette dans laquelle un châssis principal (14) s'étend vers l'arrière à partir d'une tubulure de refoulement (13), un châssis arrière (15) s'étend vers l'arrière à partir du châssis principal (14), un corps de structure de châssis (20) s'étend vers le bas depuis une partie arrière du châssis principal (14) et du châssis arrière (15) afin de former un espace (57), un plateau pivot (22) est monté sur une partie inférieure du corps de la structure de châssis (20) et un bras oscillant arrière (24) est supporté sur le plateau pivot (22), dans laquelle :
une pompe à essence (58) est disposée dans l'espace (55) qui est formé par le corps de structure de châssis (20),
**caractérisée en ce que**
une structure de montage de la pompe à essence (58) a une première étai (63) s'étendant vers l'arrière à partir d'une traverse (59) agencée entre des éléments de châssis avant droit et gauche (61L, 61R) du corps de structure de châssis (20) s'étendant vers le bas depuis la partie arrière du châssis principal (14), et des secondes étais gauche et droite (64L, 64R) s'étendant vers le bas depuis les châssis arrières (15L, 15R),
dans laquelle un trou cylindrique (67) est formé dans la première étai (63) et un élément d'arbre (68) lequel fait saillie vers le bas depuis la pompe à essence (58) est fixé au trou cylindrique (67) et la pompe à essence (58) est en outre reliée au niveau d'une partie supérieure de celle-ci aux châssis arrières (15L, 15R) par les secondes étais (64L, 64R).

2. Motocyclette selon la revendication 1, dans laquelle le châssis principal (14) est agencé sur une ligne centrale (79) dans la direction de largeur de véhicule, un réservoir d'essence (47) est agencé au niveau d'une position où le réservoir d'essence (47) passe sur le châssis principal (14), la pompe à essence (58) est agencée sensiblement au niveau du centre dans la direction de largeur du véhicule et, au même moment, une partie de connexion (77) d'un tuyau d'alimentation en essence qui relie le réservoir d'essence (47) et la pompe à essence est agencée sur une partie supérieure de la pompe à essence (58).

3. Motocyclette selon la revendication 1 ou la revendication 2, dans laquelle une boîte de stockage d'articles (44) est agencée sur un côté de la pompe à essence (58). '
